# EUROPEAN PATENT SPECIFICATION

(11) **EP 3 272 056 B1**
(45) Date of publication and mention of the grant of the patent: **21.09.2022**
(21) Application number: 16712568.1
(22) Date of filing: 22.02.2016
(51) Int. Cl.: H04L 5/00

(54) **LOAD-AWARE CHANNEL STATE REFERENCE SIGNAL TRANSMISSION**
LASTBEWUSSTE KANALSTATUSREFERENZSIGNALÜBERTRAGUNG
TRANSMISSION DE SIGNAUX DE RÉFÉRENCE D'ÉTAT DE CANAL SENSIBLE À LA CHARGE

(30) Priority: 17.03.2015 US 201514660712
(43) Date of publication of application: 24.01.2018
(73) Proprietor: Qualcomm Incorporated, San Diego, CA 92121-1714 (US)
(72) Inventor: CHANDE, Vinay, San Diego, California 92121 (US); PATEL, Chirag Sureshbhai, San Diego, California 92121 (US); KHOSHNEVISAN, Mostafa, San Diego, California 92121 (US); JI, Tingfang, San Diego, California 92121 (US)
(74) Representative: Dunlop, Hugh Christopher
(86) International application number: PCT/US2016/018946
(87) International publication number: WO 2016/148845

(56) References cited:
- ERICSSON: "Discussion on CSI reporting for Inter eNB CoMP", 3GPP DRAFT; R3-150309_ECOMP_CSI, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG3, no. Athens, Greece; 20150209 - 20150213 8 February 2015 (2015-02-08), XP050937060, Retrieved from the Internet: URL:http://www.3gpp.org/ftp/Meetings_3GPP_ SYNC/RAN3/Docs/ [retrieved on 2015-02-08]
- MEDIATEK INC: "CQI for multi-CSI-RS-resource feedback", 3GPP DRAFT; R1-121178 CQI FOR MULTI-CSI-RS-RESOURCE FEEDBACK, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Jeju, Korea; 20120326 - 20120330, 20 March 2012 (2012-03-20), XP050599478, [retrieved on 2012-03-20]
- HUAWEI: "CSI-RS design to support multiple-cell measurement", 3GPP DRAFT; R1-101058 CSI RS DESIGN TO SUPPORT MULTIPLE-CELL MEASUREMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. San Francisco, USA; 20100222, 16 February 2010 (2010-02-16), XP050418629, [retrieved on 2010-02-16]
- FUJITSU: "CSI-RS Patterns for Interference Measurements for CoMP", 3GPP DRAFT; R1-120756, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dresden, Germany; 20120206 - 20120210, 31 January 2012 (2012-01-31), XP050563128, [retrieved on 2012-01-31]

## Description

### BACKGROUND

The present disclosure relates generally to communication systems, and more particularly, to channel state information transmissions in wireless communication systems.

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example telecommunication standard is Long Term Evolution (LTE). LTE is a set of enhancements to the Universal Mobile Telecommunications System (UMTS) mobile standard promulgated by Third Generation Partnership Project (3GPP). LTE is designed to better support mobile broadband Internet access by improving spectral efficiency, lowering costs, improving services, making use of new spectrum, and better integrating with other open standards using OFDMA on the downlink (DL), SC-FDMA on the uplink (UL), and multiple-input multiple-output (MIMO) antenna technology. Preferably, these improvements should be applicable to other multi-access technologies and the telecommunication standards that employ these technologies.

As the demand for mobile broadband access continues to increase, improvements are needed in the various telecommunications standards. For example, there may be instances in which multiple evolved node Bs (eNBs) in a wireless communication network operate in a coordinated manner. In such instances, however, certain resources from a cell associated with one of the eNBs in the network may coincide and interfere with resources from a different cell associated with another of the eNBs in the network. Therefore, it may be desirable to implement mechanisms that address the issues that may arise from such occurrences.

Document ERICSSON: "Discussion on CSI reporting for Inter eNB CoMP",3GPP DRAFT; R3-150309 (2015-02-08) discusses 3GPP CSI RS procedures in which some resource elements are used to transmit Reference Signals (called Non Zero Power CSI-RS - NZP CSI-RS) and some resource elements are used for CSI Interference Measurement (CSI IM) Document HUAWEI: "CSI-RS design to support multiple-cell measurement",3GPP DRAFT; R1-101058 (2010-02-16) discloses the boosting of CSI-RS power for improving the signal-to-interference-and-noise-ratio in regards to interfering data transmissions from neighboring cells.

### SUMMARY

A method performed by an evolved node B, eNB, a corresponding eNB and a corresponding computer-readable medium are defined by appended claims 1, 9, 15 respectively. The invention is defined by the appended claims.

### BRIEF DESCRIPTION OF THE DRAWINGS

FIGS. 1A and 1B are diagrams illustrating an example of a communications system including an evolved node B having a resource control component in communication with a user equipment.
FIG. 2 is a flowchart illustrating an example of a method of providing channel state information resources.
FIG. 3 is a flowchart illustrating an example of a method of processing received channel state information reports.
FIG. 4 is a diagram illustrating an example of channel state information resource scheduling.
FIG. 5 is a diagram illustrating an example of a network architecture.
FIG. 6 is a diagram illustrating an example of an access network.
FIG. 7 is a diagram illustrating an example of a DL frame structure in LTE.
FIG. 8 is a diagram illustrating an example of an UL frame structure in LTE.
FIG. 9 is a diagram illustrating an example of a radio protocol architecture for the user and control planes.
FIG. 10 is a diagram illustrating an example of an evolved Node B and user equipment in an access network.
FIG. 11 is a conceptual data flow diagram illustrating the data flow between different modules/means/components in an exemplary apparatus.
FIG. 12 is a diagram illustrating an example of a hardware implementation for an apparatus employing a processing system.

### DETAILED DESCRIPTION

The detailed description set forth below in connection with the appended drawings is intended as a description of various configurations and is not intended to represent the configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

In an aspect, the present disclosure provides for adjustment of downlink channel state information reference signal (CSI-RS) transmissions that may be used as interference management resources (IMR) by devices such as user equipment (UE) to determine radio channel conditions. Such an approach may be used in various multi-access technologies and the telecommunication standards that employ these technologies.

In an LTE network, for example, a base station such as an evolved NodeB (eNB) may determine that certain resources will be used for UE estimates rather than for carrying data. For example, an LTE resource may be a time/frequency resource in an LTE orthogonal frequency division multiplexing (OFDM) grid. The resource may be used to transmit a CSI-RS, which may in turn be used by a UE to estimate channel conditions of transmissions from the eNB. Another resource may be an interference measurement resource (IMR or CSI-IM), which may be used by a UE that is not connected to the eNB to measure interference. The interference may include interference caused by the eNB, as represented by the CSI-RS.

If the CSI-RS is transmitted with fixed properties, a UE estimating interference based on measuring an IMR that coincides with the CSI-RS transmission may overestimate interference to other resources. For example, when the eNB has no downlink data for one or more of its connected UEs, the eNB may not transmit using the other resources, but may still transmit a fixed CSI-RS. Consequently, although the fixed CSI-RS transmission may indicate interference from the eNB, the eNB may be causing little or no interference on other resources. Accordingly, the UE using the IMR to determine a channel state indicator (CSI) may overestimate the interference and report a lower CSI. As another example, the eNB may use multiple input multiple output (MIMO) techniques (e.g. beamforming) for transmissions to connected UEs by precoding transmissions. The precoding may also affect the actual interference caused to other UEs. Accordingly, CSI estimates based on a fixed CSI-RS transmission may not accurately reflect actual interference levels.

In an aspect, an eNB may improve interference estimates of UEs connected to other eNBs by adjusting a transmission of a CSI-RS based on a downlink transmission load. For example, when the eNB has little downlink data to transmit to connected UEs, the eNB may reduce or turn off the CSI-RS. As another example, the eNB may precode the CSI-RS with a precoding vector to be used for a scheduled transmission. Accordingly, the adjusted CSI-RS transmission of the eNB may be a load-aware CSI-RS transmission.

In an aspect, if the adjusted CSI-RS is used by a UE connected to the eNB to measure a channel, a CSI transmitted by the UE may be inaccurate. The eNB may configure the UE not to use the adjusted CSI-RS, or may ignore a CSI reported by the UE based on the adjusted CSI-RS.

Several aspects of telecommunication systems will now be presented with reference to various apparatus and methods. These apparatus and methods will be described in the following detailed description and illustrated in the accompanying drawings by various blocks, modules, components, circuits, steps, processes, algorithms, etc. (collectively referred to as "elements"). These elements may be implemented using electronic hardware, computer software, or any combination thereof. Whether such elements are implemented as hardware or software depends upon the particular application and design constraints imposed on the overall system.

By way of example, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise.

Accordingly, in one or more exemplary embodiments, the functions described may be implemented in hardware, software, firmware, or any combination thereof. If implemented in software, the functions may be stored on or encoded as one or more instructions or code on a computer-readable medium. Computer-readable media includes computer storage media. Storage media may be any available media that can be accessed by a computer. By way of example, and not limitation, such computer-readable media can comprise a random-access memory (RAM), a read-only memory (ROM), an electrically erasable programmable ROM (EEPROM), compact disk ROM (CD-ROM) or other optical disk storage, magnetic disk storage or other magnetic storage devices, combinations of the aforementioned types of computer-readable media, or any other medium that can be used to store computer executable code in the form of instructions or data structures that can be accessed by a computer.

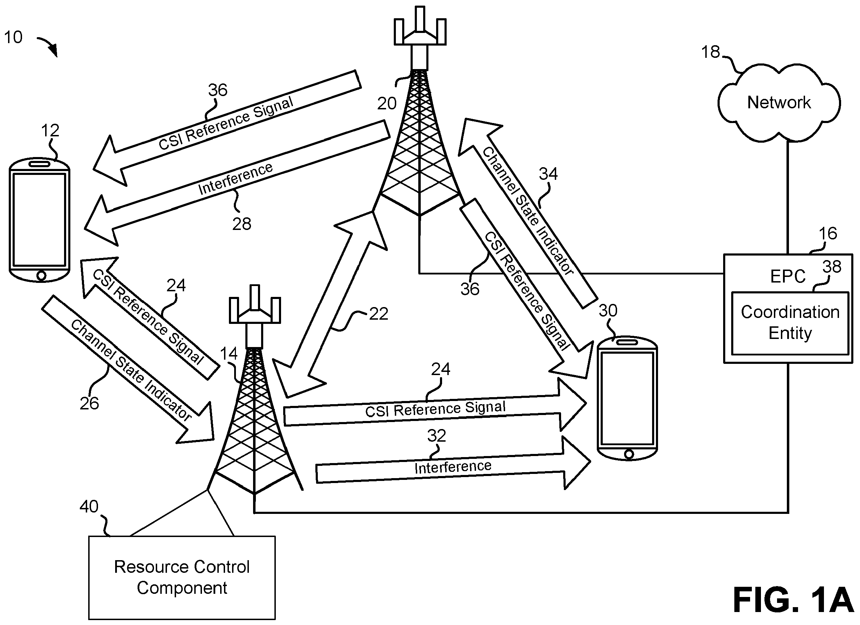

Referring to FIG. 1A, in an aspect, a wireless communication system 10 includes an evolved nodeB (eNB) 14 in communication with a user equipment (UE) 12 and a second eNB 20 that is in communication with a second UE 30. The wireless communication system 10 may be a coordinated multi-point (CoMP) system in which the eNB 14 and eNB 20 coordinate transmissions. For example, the eNB 14 and the eNB 20 may communicate with each other via an interface 22. The eNB 14 and the eNB 20 may also communicate with a coordination entity 38, which may be located in an evolved packet core (EPC) 16. In an aspect, the eNB 14 may transmit a CSI reference signal 24 to the UE 12 and receive a CSI from the UE 12. The eNB 14 may also transmit the CSI reference signal 24 and interference 32 to the second UE 30, which may receive other CSI reference signals 36 from the second eNB 20 and provide a CSI 34 to the second eNB 20. The UE 12 may also receive the CSI reference signal 36 and interference 28 from the second eNB 20 for use in determining the CSI 26. The eNB 14 and/or the eNB 20 may include a resource control component 40 for managing resources for the CSI reference signals 24 and 36.

As used herein, a UE 12 may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology. A UE 12 may be a cellular phone, a personal digital assistant (PDA), a wireless modem, a wireless communication device, a handheld device, a tablet computer, a laptop computer, a cordless phone, a wireless local loop (WLL) station, a global positioning system (GPS) device, a multimedia device, a video device, a digital audio player (e.g., MP3 player), a camera, a game console, a wearable computing device (e.g., a smart-watch, smart-glasses, a health or fitness tracker, etc), an appliance, a sensor, a vehicle communication system, a medical device, a vending machine, a device for the Intemet-of-Things, or any other similar functioning device. A UE 12 may be able to communicate with macro eNBs, pico eNBs, femto eNBs, relays, and the like.

An eNB 14 may provide a cell serving the UE 12. In some aspects, multiple UEs such as UE 12 may be in communication coverage with one or more eNBs, including eNB 14 and eNB 20. An eNB 14 may be a station that communicates with the UE 12 and may also be referred to as a base station, an access point, a NodeB, etc. Each eNB, such as eNB 14 may provide communication coverage for a particular geographic area. In 3GPP, the term "cell" can refer to a coverage area of an eNB 14 and/or an eNB subsystem serving the coverage area, depending on the context in which the term is used. For example, the eNB 14 may be the cell where the UE 12 initially performs a connection establishment procedure. Such a cell may be referred to as a primary cell or Pcell. Another eNB (not shown) may be operating on another frequency and may be referred to as a secondary cell. It should be apparent that an eNB may operate as either a primary cell or a secondary cell depending on the connection state of the UE 12. A cell ID such as a primary cell identifier (PCI) may be mapped to an eNB.

A UE may be within the coverage areas of multiple eNBs. One of these eNBs may be selected to serve the UE. The serving eNB may be selected based on various criteria including radio resource monitoring measurements and radio link monitoring measurements such as received power, path loss, signal-to-noise ratio (SNR), etc.

An eNB 14 may provide communication coverage for a macro cell, a small cell, a pico cell, a femto cell, and/or other types of cell. A macro cell may cover a relatively large geographic area (e.g., several kilometers in radius) and may allow unrestricted access by UEs 12 with service subscription. The term "small cell," as used herein, refers to a relatively low transmit power and/or a relatively small coverage area cell as compared to a transmit power and/or a coverage area of a macro cell. Further, the term "small cell" may include, but is not limited to, cells such as a femto cell, a pico cell, an access point base station, a Home NodeB, or a femto access point. For instance, a macro cell may cover a relatively large geographic area, such as, but not limited to, several kilometers in radius. In contrast, a pico cell may cover a relatively small geographic area and may allow unrestricted access by UEs 12 with service subscription. A femto cell may cover a relatively small geographic area (e.g., a home) and may allow restricted access by a UE 12 having association with the femto cell (e.g., UE 12 may be subscribed to a Closed Subscriber Group (CSG) such that the femto cell can be used by users in the home, etc.). An eNB 14 for a macro cell may be referred to as a macro eNB. An eNB 14 for a pico cell may be referred to as a pico eNB. An eNB 14 for a femto cell may be referred to as a femto eNB or a home eNB.

The resource control component 40 may include hardware and/or software code executable by a processor for managing resource elements for a downlink transmission such as CSI reference signals 24, 36. In an aspect, the term "component" as used herein may be one of the parts that make up a system, may be hardware, firmware, and/or software, and may be divided into other components.

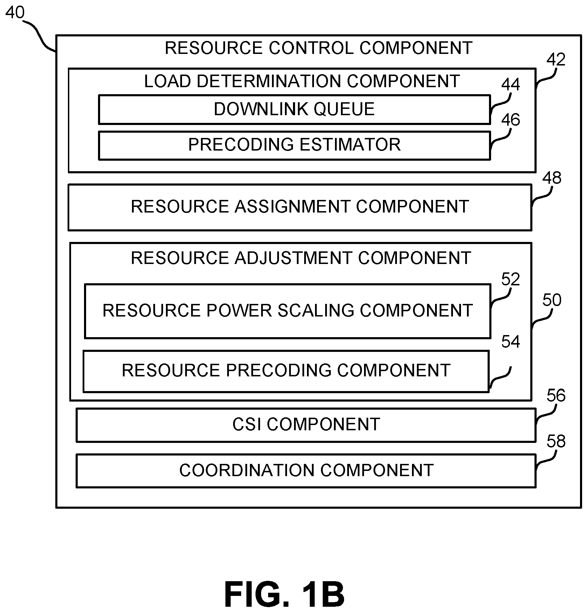

As illustrated in FIG. 1B, the resource control component 40 may include a load determination component 42 that determines a downlink traffic load, a resource assignment component 48 that schedules CSI resources, a resource adjustment component 50 that adjusts scheduled resources based on the downlink traffic load, and a CSI component 56 that processes a CSI received from a UE 12. The functionalities of any of the components described may be combined or alternatively be incorporated in a different module. As discussed above, the resource control component 40 may be included in an eNB (e.g., the eNB 14 and/or the eNB 20).

The load determination component 42 may include hardware and/or software code executable by a processor for determining a downlink transmission status for a first UE connected to an eNB. For instance, the load determination component 42 of resource control component 40 of eNB 14 may include hardware and/or software code executable by a processor for determining a downlink transmission status for a first UE 12 connected to the eNB 14. The downlink transmission status indicates an amount of downlink traffic scheduled for the UE 12 and/or other UEs connected to the eNB 14. In an aspect, the load determination component 42 may include a downlink queue 44 or otherwise have access to the downlink queue 44. The downlink queue 44 may store downlink traffic for each connected UE before transmission. For example, the downlink queue 44 may be a memory. The load determination component 42 may determine the downlink transmission status by measuring the amount of data in the downlink queue 44.

In another aspect, the downlink transmission status includes expected transmission properties of downlink traffic to the UE 12 or another connected UE. For example, a downlink transmission may use MIMO techniques that use precoding to alter the transmission signal for different antennas. The load determination component 42 may include a precoding estimator 46 that may be configured to estimate a precoding vector to be used for a future transmission. In an aspect, the precoding estimator 46 may include a processor configured to determine a precoding vector based on a code transmitted by a connected UE. The precoding estimator 46 may also estimate the future precoding vector based on a most recently used precoding vector.

The resource assignment component 48 may include hardware and/or software code executable by a processor for scheduling CSI resources. For example, the resource assignment component 48 of eNB 14 may communicate with the eNB 20, other eNBs (not shown), and/or the coordination entity 38 to coordinate scheduling of CSI resources. The resource assignment component 48 may assign the UE 12 different CSI processes that combine a channel estimation from one non-zero power CSI-RS resource with one interference measurement resource (IMR or CSI-IM). For example, the CSI-RS resources may be resources where the eNB 14 transmits a reference signal and the IMR may be a resource where the eNB 20 transmits a reference signal that will be detected as interference at the UE 12. In an aspect, the resource assignment component 48 may be configured to avoid assigning CSI-RS resources to a UE 12 that are adjusted, as discussed in further detail below.

The resource adjustment component 50 may include hardware and/or software code executable by a processor for adjusting a scheduled non-zero power (NZP) CSI-RS transmission based on the downlink transmission status. In an aspect, the resource adjustment component 50 may include or control a transmitter such as an RF transmitter for adjusting the transmission. The resource adjustment component 50 may include a resource power scaling component 52 that may adjust the scheduled NZP CSI-RS transmission by scaling the transmit power based on the downlink traffic load. For example, the resource power scaling component 52 may decrease the transmit power when the downlink transmission status indicates a low level of downlink traffic. For instance, if the UE 12 and/or other connected UEs have no downlink traffic, the resource power scaling component 52 of eNB 14 may transmit the NZP CSI-RS with zero power or turn off the NZP CSI-RS. Accordingly, the NZP CSI-RS reflects the level of interference that will be created by the downlink transmissions of the eNB 14.

In another aspect, the resource adjustment component 50 may include a resource precoding component 54 configured to adjust the NZP CSI-RS by precoding the NZP CSI-RS transmission with a precoding vector determined by the precoding estimator 46. For instance, the resource precoding component 54 of eNB 14 may adjust the NZP CSI-RS such that it has similar transmission properties to downlink traffic that will be transmitted by the eNB 14. For example, if the precoding vector is used to provide beam-forming to focus the traffic transmission in a certain direction, applying the same precoding vector to the NZP CSI-RS transmission may enable the second UE 30 to estimate the interference that will be caused by the downlink traffic.

The CSI component 56 may include hardware and/or software code executable by a processor for processing CSI transmissions from one or more UEs. In an aspect, CSI component 56 may include or control a receiver such as an RF receiver for receiving the CSI transmissions. The CSI component 56 may further include a processor configured to process the CSI value reported by a UE. For example, the CSI component 56 may determine whether to accept or ignore a received CSI value based on the downlink transmission status. For example, the CSI component 56 of eNB 14 may ignore a CSI transmitted by a UE when the eNB 14 has no downlink data for the UE. When the CSI component 56 accepts the CSI value reported by a UE, the CSI component 56 may use the CSI value for coordinated scheduling of downlink transmissions to the UE.

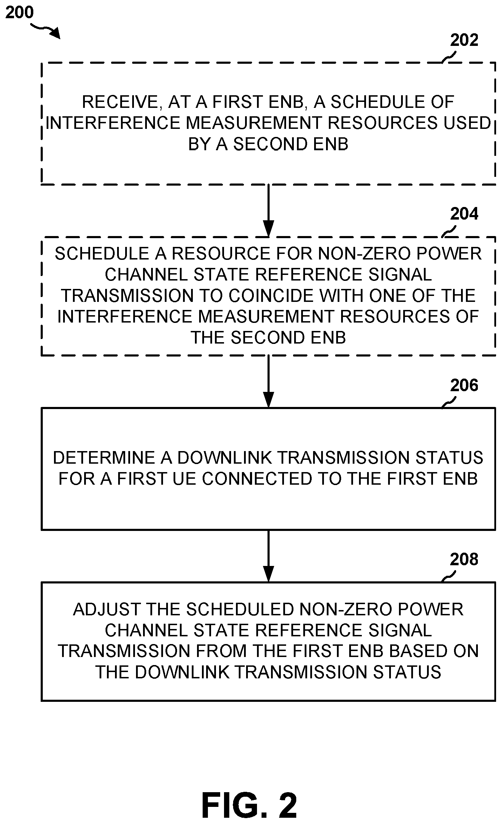

Referring to FIG. 2, in an operational aspect, a base station such as eNB 14 (FIG. 1A) may perform one aspect of a method 200 for CSI resource transmission. The eNB 14 may be considered a first eNB. While, for purposes of simplicity of explanation, the method is shown and described as a series of acts, it is to be understood and appreciated that the method (and further methods related thereto) is/are not limited by the order of acts, as some acts may, in accordance with one or more aspects, occur in different orders and/or concurrently with other acts from that shown and described herein. For example, it is to be appreciated that a method could alternatively be represented as a series of interrelated states or events, such as in a state diagram. Moreover, not all illustrated acts may be required to implement a method in accordance with one or more features described herein.

In block 202, the method 200 may optionally include receiving a schedule of interference measurement resources used by a second (e.g., a neighbor) eNB. In an aspect, for example, the coordination component 58 (FIG. 1B) may receive a schedule of interference measurement resources used by a neighbor eNB 20 (FIG. 1A). In an aspect, the schedule may be received from the neighbor eNB. In another aspect, the schedule may be received from coordination entity 38 (FIG. 1A). The schedule of interference measurement resources may also include scheduling information for the first eNB (e.g., eNB 14).

In block 204, the method 200 may optionally include scheduling a non-zero power channel state reference signal transmission to coincide with one of the interference measurement resources of the second eNB. In an aspect, for example, the resource assignment component 48 (FIG. 1B) may schedule the non-zero power channel state reference signal transmission to coincide with one of the interference measurement resources of the neighbor eNB 20. As used herein, coincide may indicate that a transmission and a resource, or two resources, substantially overlap with one another or can overlap. For example, the resource assignment component 48 may determine a NZP-RS signal to transmit on a resource element designated as a CSI-IM resource for the neighbor eNB 20. Accordingly the NZP-RS signal may coincide with the CSI-IM resource for the neighbor eNB 20. The first eNB 14 and the second eNB 20 may coordinate scheduling of the NZP-RS signal and the CSI-IM signal based on the received schedule of interference measurement resources or using any other technique for coordination. As used herein, coordination may include scheduling based on shared information. In an aspect, the resource assignment component 48 may also determine whether the selected resource will be used as a CSI-RS resource by the first UE 12. In an aspect, the resource assignment component 48 may avoid assigning a NZP-RS signal used as a CSI-IM resource for a neighbor eNB as an CSI-RS resource for the first UE 12. For example, the resource assignment component 48 may assign a different NZP-RS signal as the CSI-RS resource for the first UE 12.

In block 206, the method 200 may include determining, at a first eNB, downlink transmission status for a first UE connected to the first eNB. In an aspect, for example, the load determination component 42 (FIG. 1B) may determine a downlink transmission status for a UE 12 connected to the first eNB 14. For example, the load determination component 42 at the first eNB 14 may determine an amount of downlink traffic for the connected UE. As another example, the load determination component 42 may determine properties of a downlink transmission such as a precoding vector.

In block 208, the method 200 may include adjusting the scheduled non-zero power channel state reference signal transmission based on the downlink transmission status. In an aspect, for example, the resource adjustment component 50 (FIG. 1B) of the first eNB may adjust the scheduled non-zero power channel state reference signal transmission based on the downlink transmission status. For example, the resource adjustment component 50 may scale the power of the scheduled NZP-RS transmission in relation to the amount of downlink traffic. If the eNB 14 has no downlink traffic for the first UE 12, the eNB may stop the NZP-RS transmission or transmit the NZP-RS transmission with zero power. As another example, the resource adjustment component 50 may precode the NZP-RS transmission with a pre-coding vector provided by the precoding estimator 46 (FIG. 1B) based on the downlink traffic. The adjusted NZP-RS transmission may be used to predict interference caused by downlink traffic of the eNB 14.

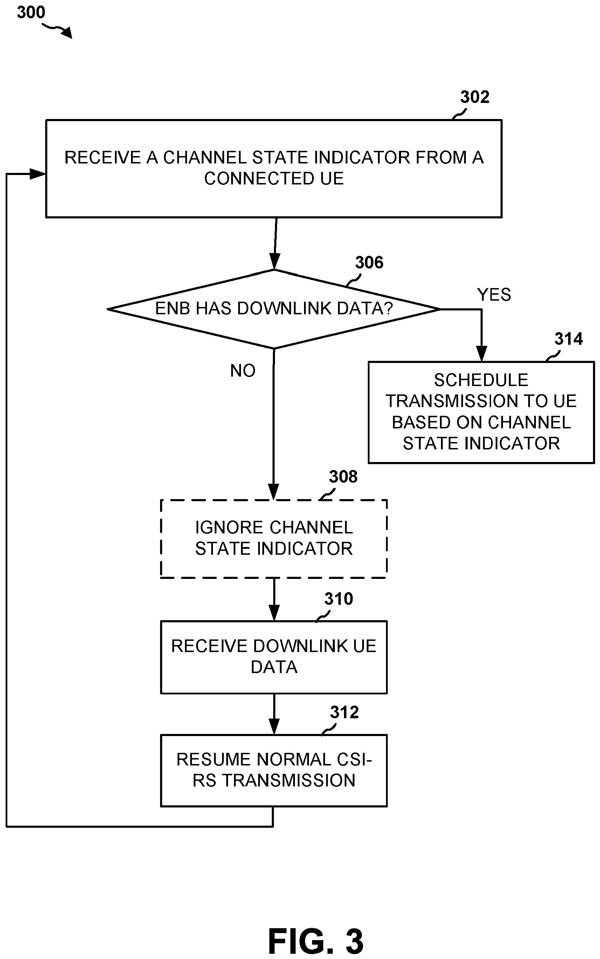

FIG. 3 is a flowchart illustrating a method 300 for processing received CSI reports from a UE. In an aspect, the method 300 may be performed by an eNB (e.g., eNB 14 of FIG. 1A) that adjusts a NZP-RS transmission according to the present disclosure. As such, method 300 may be performed concurrently with the method 200 described above. For example, in an operational aspect, an eNB such as eNB 14 (FIG. 1A) may perform one aspect of a method 300 for processing received CSI reports from a UE. While, for purposes of simplicity of explanation, the method is shown and described as a series of acts, it is to be understood and appreciated that the method (and further methods related thereto) is/are not limited by the order of acts, as some acts may, in accordance with one or more aspects, occur in different orders and/or concurrently with other acts from that shown and described herein. For example, it is to be appreciated that a method could alternatively be represented as a series of interrelated states or events, such as in a state diagram. Moreover, not all illustrated acts may be required to implement a method in accordance with one or more features described herein.

In block 302, the method 300 may include receiving a CSI from a connected UE (e.g., a first UE connected to a first eNB). In an aspect, for example, the CSI component 56 (FIG. 1B) of the eNB 14 may receive the CSI from a first UE 12 (FIG. 1A) connected to the eNB 14. The UE 12 may determine the CSI for a CSI process including a NZP CSI-RS transmission and one CSI-IM transmission.

In block 306, the method 300 may include determining whether the eNB has downlink data for one or more connected UEs. In an aspect, for example, the load determination component 42 (FIG. 1B) may determine whether the eNB has downlink data for the UE 12 or other UEs. In an aspect, when the eNB does not have downlink data, the NZP-RS transmission on which the UE 12 determined the CSI report may have been adjusted, or not transmitted. In block 306, the resource adjustment component 50 (FIG. 1B) may alternatively or additionally indicate whether the NZP-RS transmission on which the CSI report is based was altered.

In block 308, in response to the determination that the eNB has no downlink data for one or more connected UEs, the method 300 may optionally include ignoring the CSI reported by the UE. In an aspect, for example, the resource assignment component 48 (FIG. 1B) and/or the coordination component 58 (FIG. 1B) may ignore the CSI reported by the UE 12. For example, the resource assignment component 48 may ignore the CSI reported by the UE 12 when scheduling resources for downlink transmissions. As another example, the coordination component 58 may ignore the CSI report when providing CSI coordination information to another eNB 20 or the coordination entity 38.

In block 310, the method 300 may include receiving downlink data for the first UE (e.g., UE 12 of FIG. 1A). In an aspect, for example, the eNB may receive downlink data for the first UE 12 from a node in the EPC 16 such as a serving gateway. The eNB may store the downlink data in downlink queue 44 (FIG. 1B). The downlink queue 44 may store the downlink data until the UE 12 can be scheduled to receive the data. The resource assignment component 48 may delay scheduling resources for the downlink data until a new CSI report is received for the first UE 12.

In block 312, the method 300 may include resuming normal CSI-RS transmission. In an aspect, for example, the resource adjustment component 50 (FIG. 1B) may resume normal CSI-RS transmissions. In other words, the resource adjustment component 50 may refrain from adjusting the NZP-RS transmission for the next scheduled resource element. Accordingly, the eNB 14 may transmit an unadjusted non-zero power channel state reference signal transmission when the first eNB 14 has downlink data for the first UE 12.

In block 314, in response to the determination at block 306 that the eNB has no downlink data for one or more connected UEs, the method 300 may include scheduling a transmission to the UE based on the channel state indicator. In an aspect, for example, the resource assignment component 48 may schedule the transmission to the UE 12 based on the channel state indicator. In an aspect, the resource assignment component 48 may coordinate with another eNB 20 or the coordination entity 38 to schedule the transmission to the UE 12 based on one or more CSI reports. In an aspect, delaying the transmission until a new CSI is received at block 302 may improve the scheduling. For example, the eNB 14 may be able to schedule the transmission using a resource that another eNB 20 has turned off to prevent interference.

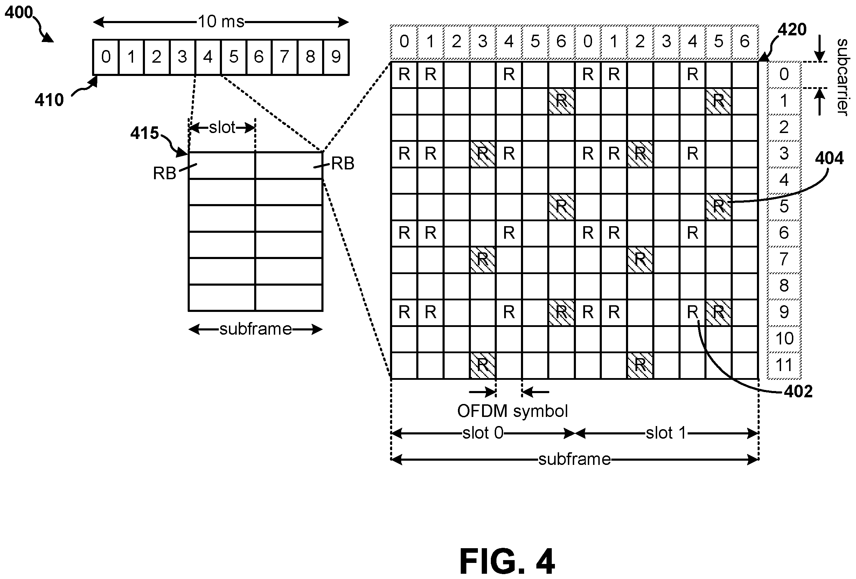

FIG. 4 is a diagram 400 illustrating an example of a DL frame structure 410 in LTE. A frame (10 ms) may be divided into 10 equally sized subframes 415. Each subframe 415 may include two consecutive time slots. A resource grid 420 may be used to represent two time slots, each time slot including a resource block. The resource grid 420 is divided into multiple resource elements. In LTE, for a normal cyclic prefix, a resource block contains 12 consecutive subcarriers in the frequency domain and 7 consecutive OFDM symbols in the time domain, for a total of 84 resource elements. For an extended cyclic prefix, a resource block contains 12 consecutive subcarriers in the frequency domain and 6 consecutive OFDM symbols in the time domain, for a total of 72 resource elements. Some of the resource elements, indicated as R 422, 424, include DL reference signals (DL-RS). The DL-RS include Cell-specific RS (CRS) (also sometimes called common RS) 422 and UE-specific RS (UE-RS) 424. UE-RS 424 are transmitted on the resource blocks upon which the corresponding physical DL shared channel (PDSCH) is mapped. The number of bits carried by each resource element depends on the modulation scheme. Thus, the more resource blocks that a UE receives and the higher the modulation scheme, the higher the data rate for the UE.

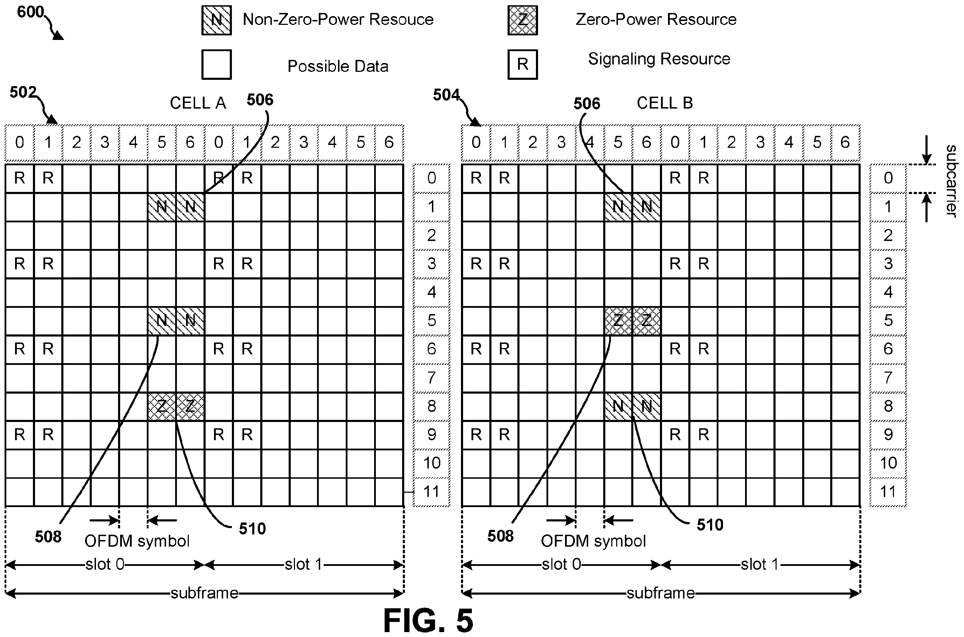

FIG. 5 is a diagram 500 illustrating an example of a DL resource grid in LTE for two cells using CoMP scheduling. A frame (10 ms) may be divided into 10 equally sized subframes. Each subframe may include two consecutive time slots. A resource grid may be used to represent two time slots, each time slot including a resource block. Each resource grid 502, 504 may represent resources used by a different cell provided by a different eNB. For example resource grid 502 may be transmitted by Cell A provided by eNB 14 (FIG. 1A) while resource grid 504 may be transmitted by Cell B provided by eNB 20 (FIG. 2). Each of the resource grids 502, 504 is divided into multiple resource elements. Some of the resource elements, indicated as R, include DL reference signals (DL-RS). The DL-RS include Cell-specific RS (CRS) (also sometimes called common RS) and UE-specific RS (UE-RS). UE-RS are transmitted on the resource blocks upon which the corresponding physical DL shared channel (PDSCH) is mapped.

In an aspect, other resource elements, indicated as N and Z may be CSI resources. The resources indicated as N may be non-zero power resources (NZP-RS). The resources indicated as Z may be zero-power resources (ZP-RS) where the cell transmission is turned off. Cell A and Cell B may coordinate to create different combinations of zero-power and non-zero power signals to provide different hypotheses of channel conditions. For example, in resource elements 506, both cell A and cell B may transmit a NZP-RS transmission. A UE (e.g. UE 12) may be able to estimate a channel state where both cell A and cell B are transmitting based on the resource elements 506. As another example, the UE 12 may be configured to measure another CSI process on resource elements 508 where cell A transmits an NZP-RS signal and cell B transmits a ZP-RS signal. Accordingly, resource elements 508 may be used to estimate a hypothesis where cell A is on and cell B is off. Conversely, the UE 12 may be configured to measure another CSI process on resource elements 510 where cell A transmits a ZP-RS signal and cell B transmits a NZP-RS signal. Accordingly, resource elements 508 may be used to estimate a hypothesis where cell A is off and cell B is on. As discussed above, an eNB providing a cell may adjust an NZP-RS signal transmission based on a current load. Accordingly, if cell A adjusts the NZP-RS transmission on resource elements 506 based on the downlink transmission load for connected UEs (e.g. UE 12), a second UE (e.g., UE 30 of FIG. 1A) connected to cell B may be able to estimate interference where both cell A and cell B are transmitting data (e.g. interference to an OFDM symbol in slot 1 or another sub-frame where either cell may transmit data).

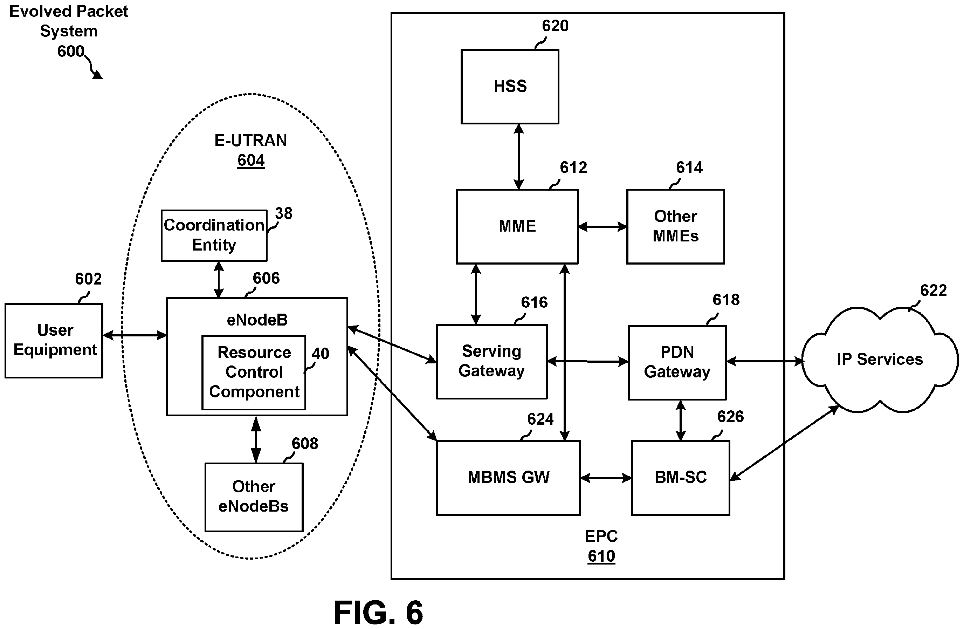

FIG. 6 is a diagram illustrating an LTE network architecture 600 including one or more eNBs having a resource control component 40 for controlling CSI resources. The LTE network architecture 600 may be referred to as an Evolved Packet System (EPS) 600. The EPS 600 may include one or more user equipment (UE) 602, an Evolved UMTS Terrestrial Radio Access Network (E-UTRAN) 604, an Evolved Packet Core (EPC) 610, and an Operator's Internet Protocol (IP) Services 622. The EPS can interconnect with other access networks, but for simplicity those entities/interfaces are not shown. As shown, the EPS provides packet-switched services, however, as those skilled in the art will readily appreciate, the various concepts presented throughout this disclosure may be extended to networks providing circuit-switched services.

The E-UTRAN includes the evolved Node B (eNB) 606 and other eNBs 608, each of which may be an example of the eNB 14 or eNB 20 (FIG. 1A) and include a resource control component 40. The E-UTRAN may further include a coordination entity 38 for coordinating scheduling among the eNBs based on CoMP techniques. The eNB 606 provides user and control planes protocol terminations toward the UE 602. The eNB 606 may be connected to the other eNBs 608 via a backhaul (e.g., an X2 interface). The eNB 606 may also be referred to as a base station, a Node B, an access point, a base transceiver station, a radio base station, a radio transceiver, a transceiver function, a basic service set (BSS), an extended service set (ESS), or some other suitable terminology. The eNB 606 provides an access point to the EPC 610 for a UE 602. Examples of UEs 602 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, a tablet, or any other similar functioning device. The UE 602 may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

The eNB 606 is connected to the EPC 610. The EPC 610 may include a Mobility Management Entity (MME) 612, a Home Subscriber Server (HSS) 620, other MMEs 614, a Serving Gateway 616, a Multimedia Broadcast Multicast Service (MBMS) Gateway 624, a Broadcast Multicast Service Center (BM-SC) 626, and a Packet Data Network (PDN) Gateway 618. The MME 612 is the control node that processes the signaling between the UE 602 and the EPC 610. Generally, the MME 612 provides bearer and connection management. All user IP packets are transferred through the Serving Gateway 616, which itself is connected to the PDN Gateway 618. The PDN Gateway 618 provides UE IP address allocation as well as other functions. The PDN Gateway 618 and the BM-SC 626 are connected to the IP Services 622. The IP Services 622 may include the Internet, an intranet, an IP Multimedia Subsystem (IMS), a PS Streaming Service (PSS), and/or other IP services. The BM-SC 626 may provide functions for MBMS user service provisioning and delivery. The BM-SC 626 may serve as an entry point for content provider MBMS transmission, may be used to authorize and initiate MBMS Bearer Services within a PLMN, and may be used to schedule and deliver MBMS transmissions. The MBMS Gateway 624 may be used to distribute MBMS traffic to the eNBs (e.g., 606, 608) belonging to a Multicast Broadcast Single Frequency Network (MBSFN) area broadcasting a particular service, and may be responsible for session management (start/stop) and for collecting eMBMS related charging information.

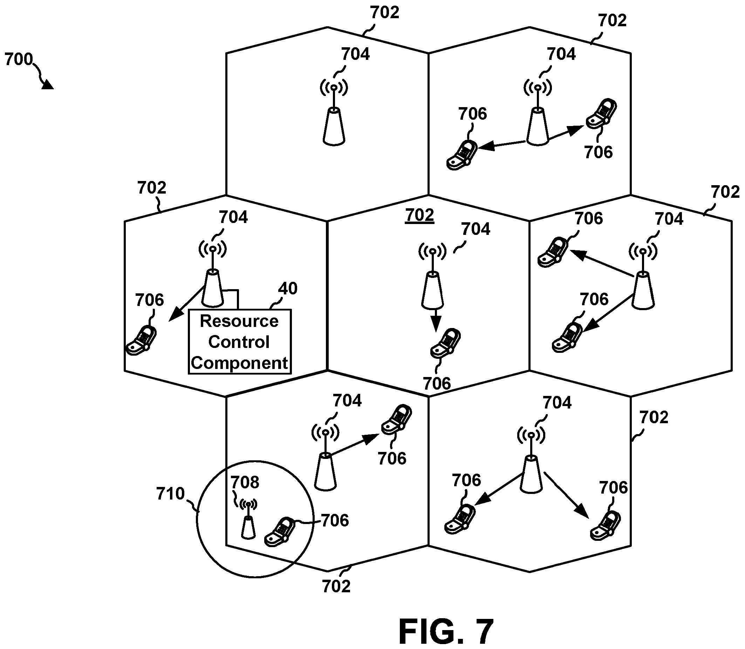

FIG. 7 is a diagram illustrating an example of an access network 700 in an LTE network architecture. In this example, the access network 700 is divided into a number of cellular regions (cells) 702. One or more lower power class eNBs 708 may have cellular regions 710 that overlap with one or more of the cells 702. The lower power class eNB 708 may be a femto cell (e.g., home eNB (HeNB)), pico cell, micro cell, or remote radio head (RRH). The macro eNBs 704 are each assigned to a respective cell 702 and are configured to provide an access point to the EPC 610 for all the UEs 706 in the cells 702. Each of the macro eNBs 704 and the lower power class eNBs 708 may be an example of the eNB 14 and include a resource control component 40 for controlling CSI resources. There is no centralized controller in this example of an access network 700, but a centralized controller may be used in alternative configurations. The eNBs 704 are responsible for all radio related functions including radio bearer control, admission control, mobility control, scheduling, security, and connectivity to the serving gateway 616. An eNB may support one or multiple (e.g., three) cells (also referred to as sectors). The term "cell" can refer to the smallest coverage area of an eNB and/or an eNB subsystem serving a particular coverage area. Further, the terms "eNB," "base station," and "cell" may be used interchangeably herein.

The modulation and multiple access scheme employed by the access network 700 may vary depending on the particular telecommunications standard being deployed. In LTE applications, OFDM is used on the DL and SC-FDMA is used on the UL to support both frequency division duplex (FDD) and time division duplex (TDD). As those skilled in the art will readily appreciate from the detailed description to follow, the various concepts presented herein are well suited for LTE applications. However, these concepts may be readily extended to other telecommunication standards employing other modulation and multiple access techniques. By way of example, these concepts may be extended to Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. These concepts may also be extended to Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), IEEE 802.11 (Wi-Fi), IEEE 802.16 (WiMAX), IEEE 802.20, and Flash-OFDM employing OFDMA. UTRA, E-UTRA, UMTS, LTE and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

The eNBs 704 may have multiple antennas supporting MIMO technology. The use of MIMO technology enables the eNBs 704 to exploit the spatial domain to support spatial multiplexing, beamforming, and transmit diversity. Spatial multiplexing may be used to transmit different streams of data simultaneously on the same frequency. The data streams may be transmitted to a single UE 706 to increase the data rate or to multiple UEs 706 to increase the overall system capacity. This is achieved by spatially precoding each data stream (i.e., applying a scaling of an amplitude and a phase) and then transmitting each spatially precoded stream through multiple transmit antennas on the DL. The spatially precoded data streams arrive at the UE(s) 706 with different spatial signatures, which enables each of the UE(s) 706 to recover the one or more data streams destined for that UE 706. On the UL, each UE 706 transmits a spatially precoded data stream, which enables the eNB 704 to identify the source of each spatially precoded data stream.

Spatial multiplexing is generally used when channel conditions are good. When channel conditions are less favorable, beamforming may be used to focus the transmission energy in one or more directions. This may be achieved by spatially precoding the data for transmission through multiple antennas. To achieve good coverage at the edges of the cell, a single stream beamforming transmission may be used in combination with transmit diversity.

In the detailed description that follows, various aspects of an access network will be described with reference to a MIMO system supporting OFDM on the DL. OFDM is a spread-spectrum technique that modulates data over a number of subcarriers within an OFDM symbol. The subcarriers are spaced apart at precise frequencies. The spacing provides "orthogonality" that enables a receiver to recover the data from the subcarriers. In the time domain, a guard interval (e.g., cyclic prefix) may be added to each OFDM symbol to combat inter-OFDM-symbol interference. The UL may use SC-FDMA in the form of a DFT-spread OFDM signal to compensate for high peak-to-average power ratio (PAPR).

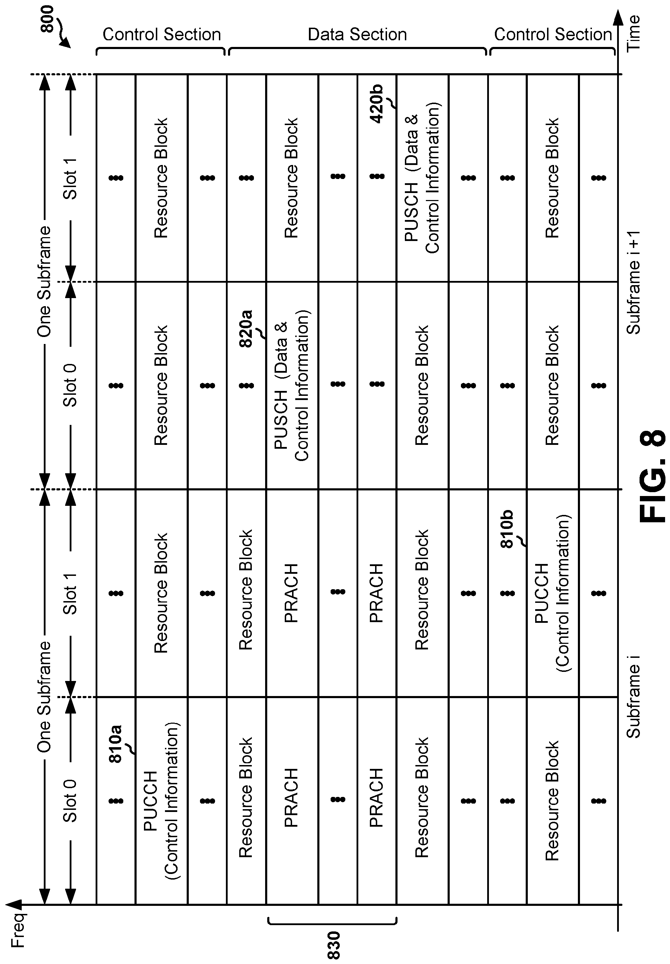

FIG. 8 is a diagram 800 illustrating an example of an UL frame structure in LTE. The available resource blocks for the UL may be partitioned into a data section and a control section. The control section may be formed at the two edges of the system bandwidth and may have a configurable size. The resource blocks in the control section may be assigned to UEs for transmission of control information. The data section may include all resource blocks not included in the control section. The UL frame structure results in the data section including contiguous subcarriers, which may allow a single UE to be assigned all of the contiguous subcarriers in the data section.

A UE may be assigned resource blocks 810a, 810b in the control section to transmit control information to an eNB. The UE may also be assigned resource blocks 820a, 820b in the data section to transmit data to the eNB. The UE may transmit control information in a physical UL control channel (PUCCH) on the assigned resource blocks in the control section. The UE may transmit data or both data and control information in a physical UL shared channel (PUSCH) on the assigned resource blocks in the data section. A UL transmission may span both slots of a subframe and may hop across frequency.

A set of resource blocks may be used to perform initial system access and achieve UL synchronization in a physical random access channel (PRACH) 830. The PRACH 830 carries a random sequence and cannot carry any UL data/signaling. Each random access preamble occupies a bandwidth corresponding to six consecutive resource blocks. The starting frequency is specified by the network. That is, the transmission of the random access preamble is restricted to certain time and frequency resources. There is no frequency hopping for the PRACH. The PRACH attempt is carried in a single subframe (1 ms) or in a sequence of few contiguous subframes and a UE can make a single PRACH attempt per frame (10 ms).

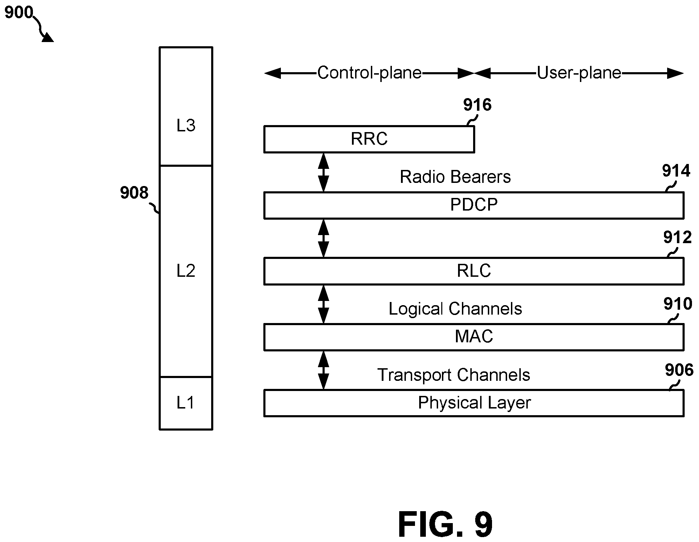

FIG. 9 is a diagram 900 illustrating an example of a radio protocol architecture for the user and control planes in LTE. The radio protocol architecture for the UE and the eNB is shown with three layers: Layer 1, Layer 2, and Layer 3. Layer 1 (L1 layer) is the lowest layer and implements various physical layer signal processing functions. The L1 layer will be referred to herein as the physical layer 906. Layer 2 (L2 layer) 908 is above the physical layer 906 and is responsible for the link between the UE and eNB over the physical layer 906.

In the user plane, the L2 layer 908 includes a media access control (MAC) sublayer 910, a radio link control (RLC) sublayer 912, and a packet data convergence protocol (PDCP) 914 sublayer, which are terminated at the eNB on the network side. Although not shown, the UE may have several upper layers above the L2 layer 908 including a network layer (e.g., IP layer) that is terminated at the PDN gateway 918 on the network side, and an application layer that is terminated at the other end of the connection (e.g., far end UE, server, etc.).

The PDCP sublayer 914 provides multiplexing between different radio bearers and logical channels. The PDCP sublayer 914 also provides header compression for upper layer data packets to reduce radio transmission overhead, security by ciphering the data packets, and handover support for UEs between eNBs. The RLC sublayer 912 provides segmentation and reassembly of upper layer data packets, retransmission of lost data packets, and reordering of data packets to compensate for out-of-order reception due to hybrid automatic repeat request (HARQ). The MAC sublayer 910 provides multiplexing between logical and transport channels. The MAC sublayer 910 is also responsible for allocating the various radio resources (e.g., resource blocks) in one cell among the UEs. The MAC sublayer 910 is also responsible for HARQ operations.

In the control plane, the radio protocol architecture for the UE and eNB is substantially the same for the physical layer 906 and the L2 layer 908 with the exception that there is no header compression function for the control plane. The control plane also includes a radio resource control (RRC) sublayer 916 in Layer 3 (L3 layer). The RRC sublayer 916 is responsible for obtaining radio resources (e.g., radio bearers) and for configuring the lower layers using RRC signaling between the eNB and the UE.

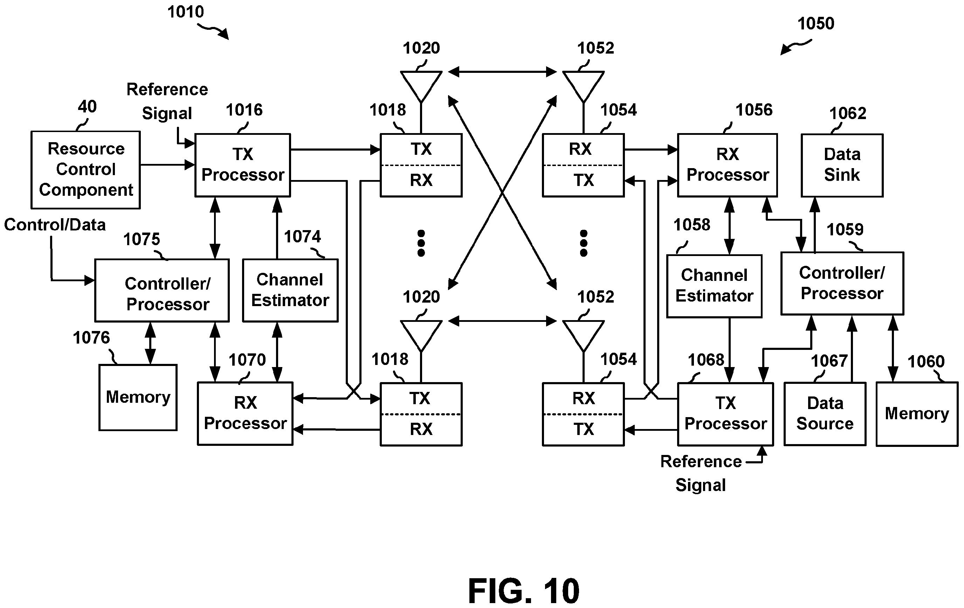

FIG. 10 is a block diagram of an eNB 1010 in communication with a UE 1050 in an access network. In the DL, upper layer packets from the core network are provided to a controller/processor 1075. The controller/processor 1075 implements the functionality of the L2 layer. In the DL, the controller/processor 1075 provides header compression, ciphering, packet segmentation and reordering, multiplexing between logical and transport channels, and radio resource allocations to the UE 1050 based on various priority metrics. The controller/processor 1075 is also responsible for HARQ operations, retransmission of lost packets, and signaling to the UE 1050.

The transmit (TX) processor 1016 implements various signal processing functions for the L1 layer (i.e., physical layer). The signal processing functions include coding and interleaving to facilitate forward error correction (FEC) at the UE 1050 and mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM)). The coded and modulated symbols are then split into parallel streams. Each stream is then mapped to an OFDM subcarrier, multiplexed with a reference signal (e.g., pilot) in the time and/or frequency domain, and then combined together using an Inverse Fast Fourier Transform (IFFT) to produce a physical channel carrying a time domain OFDM symbol stream. As discussed above, the resource control component 40 may designate various OFDM symbols as resources for CSI. The resource control component 40 may also alter the transmission of the CSI resources by controlling the TX processor 1016. The OFDM stream is spatially precoded to produce multiple spatial streams. Channel estimates from a channel estimator 1074 may be used to determine the coding and modulation scheme, as well as for spatial processing. The channel estimate may be derived from a reference signal and/or channel condition feedback transmitted by the UE 1050. Each spatial stream may then be provided to a different antenna 1020 via a separate transmitter 1018TX. Each transmitter 1018TX may modulate an RF carrier with a respective spatial stream for transmission.

At the UE 1050, each receiver 1054RX receives a signal through its respective antenna 1052. Each receiver 1054RX recovers information modulated onto an RF carrier and provides the information to the receive (RX) processor 1056. The RX processor 1056 implements various signal processing functions of the L1 layer. The RX processor 1056 may perform spatial processing on the information to recover any spatial streams destined for the UE 1050. If multiple spatial streams are destined for the UE 1050, they may be combined by the RX processor 1056 into a single OFDM symbol stream. The RX processor 1056 then converts the OFDM symbol stream from the time-domain to the frequency domain using a Fast Fourier Transform (FFT). The frequency domain signal comprises a separate OFDM symbol stream for each subcarrier of the OFDM signal. The symbols on each subcarrier, and the reference signal, are recovered and demodulated by determining the most likely signal constellation points transmitted by the eNB 1010. These soft decisions may be based on channel estimates computed by the channel estimator 1058. The soft decisions are then decoded and deinterleaved to recover the data and control signals that were originally transmitted by the eNB 1010 on the physical channel. The data and control signals are then provided to the controller/processor 1059.

The controller/processor 1059 implements the L2 layer. The controller/processor can be associated with a memory 1060 that stores program codes and data. The memory 1060 may be referred to as a computer-readable medium. In the UL, the controller/processor 1059 provides demultiplexing between transport and logical channels, packet reassembly, deciphering, header decompression, control signal processing to recover upper layer packets from the core network. The upper layer packets are then provided to a data sink 1062, which represents all the protocol layers above the L2 layer. Various control signals may also be provided to the data sink 1062 for L3 processing. The controller/processor 1059 is also responsible for error detection using an acknowledgement (ACK) and/or negative acknowledgement (NACK) protocol to support HARQ operations.

In the UL, a data source 1067 is used to provide upper layer packets to the controller/processor 1059. The data source 1067 represents all protocol layers above the L2 layer. Similar to the functionality described in connection with the DL transmission by the eNB 1010, the controller/processor 1059 implements the L2 layer for the user plane and the control plane by providing header compression, ciphering, packet segmentation and reordering, and multiplexing between logical and transport channels based on radio resource allocations by the eNB 1010. The controller/processor 1059 is also responsible for HARQ operations, retransmission of lost packets, and signaling to the eNB 1010.

Channel estimates derived by a channel estimator 1058 from a reference signal or feedback transmitted by the eNB 1010 may be used by the TX processor 1068 to select the appropriate coding and modulation schemes, and to facilitate spatial processing. The spatial streams generated by the TX processor 1068 may be provided to different antenna 1052 via separate transmitters 1054TX. Each transmitter 1054TX may modulate an RF carrier with a respective spatial stream for transmission.

The UL transmission is processed at the eNB 1010 in a manner similar to that described in connection with the receiver function at the UE 1050. Each receiver 1018RX receives a signal through its respective antenna 1020. Each receiver 1018RX recovers information modulated onto an RF carrier and provides the information to a RX processor 1070. The RX processor 1070 may implement the L1 layer.

The controller/processor 1075 implements the L2 layer. The controller/processor 1075 can be associated with a memory 1076 that stores program codes and data. The memory 1076 may be referred to as a computer-readable medium. In the UL, the controller/processor 1075 provides demultiplexing between transport and logical channels, packet reassembly, deciphering, header decompression, control signal processing to recover upper layer packets from the UE 1050. Upper layer packets from the controller/processor 1075 may be provided to the core network. The controller/processor 1075 is also responsible for error detection using an ACK and/or NACK protocol to support HARQ operations.

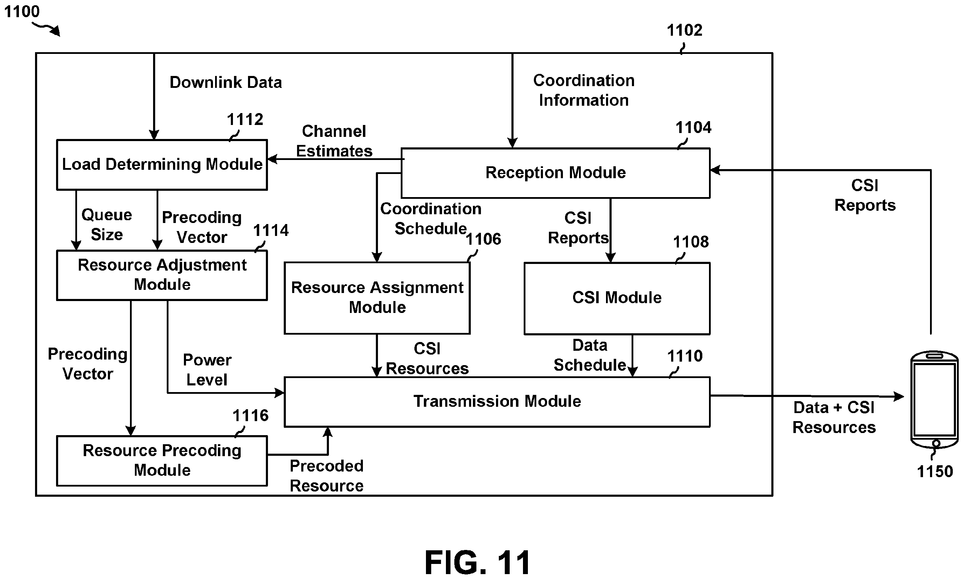

FIG. 11 is a conceptual data flow diagram 1300 illustrating the data flow between different modules/means/components in an exemplary apparatus 1102. The apparatus 1102 may be a eNB.

The apparatus 1102 may include a reception module 1104 that receives uplink communications from a UE 1150. For example, the reception module 1104 may receive CSI reports from the UE 1150. The reception module 1104 may also receive coordination information such as a coordination schedule from another eNB or a coordination entity 38. In an aspect, the reception module 1104 may include a coordination component 58 and determine a schedule of another eNB based on the coordination information. The reception module 1104 may provide the schedule to a resource assignment module 1106. The reception module 1104 may forward received CSI reports to the CSI module 1108. The reception module 1104 may also measure the received uplink communications and provide channel estimates to a load determining module 1112.

The resource assignment module 1106 may include the resource assignment component 48 (FIG. 1B). The resource assignment module 1106 may schedule CSI resources based on the coordination schedule of one or more other eNBs. For example, the resource assignment module 1106 may determine which resources to use as CSI resources and also determine which CSI resources are NZP-RS and ZP-RS. The resource assignment module 1106 may provide the CSI resources to the transmission module 1110.

The CSI module 1108 may include the CSI component 56 (FIG. 1B). The CSI module 1108 may receive the CSI reports forwarded by the reception module 1104. The CSI module 1108 may determine network conditions based on the CSI reports. The CSI module 1108 may schedule downlink data for the UE 1150 based on the network conditions in coordination with the other eNBs and provide the data schedule to the transmission module 1110.

The load determining module 1112 may receive the channel estimates from the reception module 1104. The load determining module 1112 may also receive downlink data from a node in the EPC 610 such as the serving gateway 616 or PDN gateway 618. The load determining module 1112 may provide a queue size and precoding vector to the resource adjustment module 1114.

The resource adjustment module 1114 may include the resource adjustment component 50 (FIG. 1B). The resource adjustment module 1114 may receive the queue size and precoding vector. The resource adjustment module 1114 may provide a power level to the transmission module 1110 based on the queue size. The resource adjustment module 1114 may also determine whether to apply the precoding vector to the CSI resources. The resource adjustment module 1114 may provide the precoding vector to the resource precoding module 1116, which may separately precode a CSI resource and provide the precoded resource to the transmission module 1110.

The apparatus may include additional modules that perform each of the blocks of the algorithm in the aforementioned flow charts of FIGs. 2 and 3. As such, each block in the aforementioned flow charts of FIGs. 2 and 3 may be performed by a module and the apparatus may include one or more of those modules. The modules may be one or more hardware components specifically configured to carry out the stated processes/algorithm, implemented by a processor configured to perform the stated processes/algorithm, stored within a computer-readable medium for implementation by a processor, or some combination thereof.

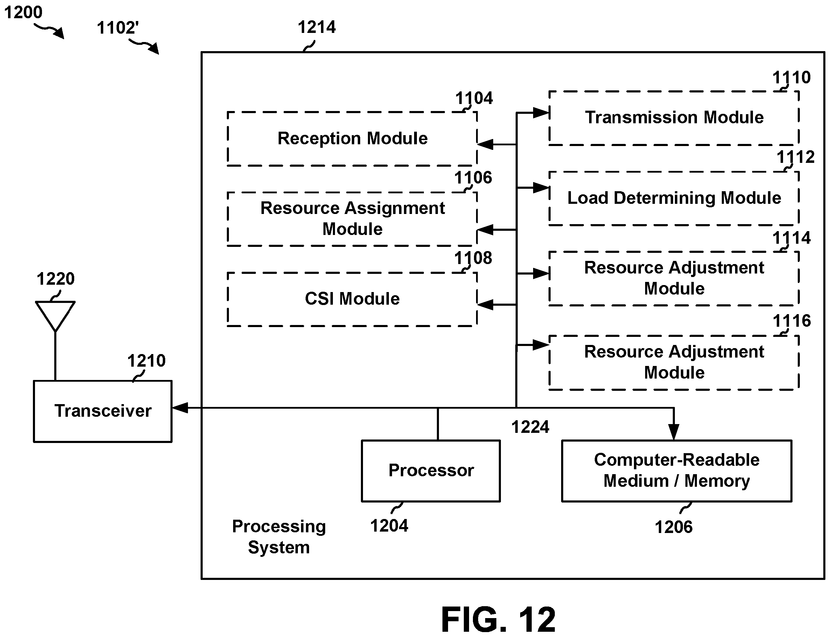

FIG. 12 is a diagram 1200 illustrating an example of a hardware implementation for an apparatus 1102' employing a processing system 1214. The processing system 1214 may be implemented with a bus architecture, represented generally by the bus 1224. The bus 1224 may include any number of interconnecting buses and bridges depending on the specific application of the processing system 1214 and the overall design constraints. The bus 1224 links together various circuits including one or more processors and/or hardware modules, represented by the processor 1204, the modules 1104, 1106, 1108, 1110, 1112, 1114, 1116 and the computer-readable medium / memory 1206. The bus 1224 may also link various other circuits such as timing sources, peripherals, voltage regulators, and power management circuits, which are well known in the art, and therefore, will not be described any further.

The processing system 1214 may be coupled to a transceiver 1210. The transceiver 1210 is coupled to one or more antennas 1220. The transceiver 1210 provides a means for communicating with various other apparatus over a transmission medium. The transceiver 1210 receives a signal from the one or more antennas 1220, extracts information from the received signal, and provides the extracted information to the processing system 1214, specifically the reception module 1104. In addition, the transceiver 1210 receives information from the processing system 1214, specifically the transmission module 1110, and based on the received information, generates a signal to be applied to the one or more antennas 1220. The processing system 1214 includes a processor 1204 coupled to a computer-readable medium / memory 1206. The processor 1204 is responsible for general processing, including the execution of software stored on the computer-readable medium / memory 1206. The software, when executed by the processor 1204, causes the processing system 1214 to perform the various functions described *supra* for any particular apparatus. The computer-readable medium / memory 1206 may also be used for storing data that is manipulated by the processor 1204 when executing software. The processing system further includes at least one of the modules 1104, 1106, 1108, 1110, 1112, 1114, 1116. The modules may be software modules running in the processor 1204, resident/stored in the computer readable medium / memory 1206, one or more hardware modules coupled to the processor 1204, or some combination thereof. The processing system 1214 may be a component of the eNB 1010 and may include the memory 1076 and/or at least one of the TX processor 1016, the RX processor 1070, and the controller/processor 1075.

In one configuration, the apparatus 1102 or apparatus 1102' for wireless communication includes means for determining, at an eNB, a downlink transmission status for a connected user equipment. The apparatus 1102/1102' may further include means for adjusting a scheduled non-zero power channel state reference signal transmission from the eNB based on the downlink transmission status. The means for adjusting the scheduled non-zero power channel state reference signal transmission may include means for scaling a transmit power of the non-zero power channel state reference signal in relation to the amount of downlink data for the UE and/or means for precoding the non-zero power channel state reference signal based on an expected precoding for downlink user data transmission for one of the connected UEs. The apparatus 1102/1102' may further include means for configuring the UE to use a different resource than the scheduled non-zero power channel state reference signal for channel state estimation. The apparatus 1102/1102' may also include means for determining that the downlink transmission status indicates that the eNB has no downlink data for the UE, means for ignoring any channel state indicators transmitted by the UE when the eNB has no downlink data for the UE, means for transmitting an unadjusted transmission of the non-zero power channel state reference signal when the eNB has downlink data for the UE, and means for delaying transmission of the downlink data to the UE until a channel state indicator is received after resuming the unadjusted transmission. The apparatus 1102/1102' may further include means for receiving a schedule of interference measurement resources used by a neighbor eNB and means for scheduling the scheduled non-zero power channel state reference signal transmission for one of the interference measurement resources. The aforementioned means may be one or more of the aforementioned modules of the apparatus 1102 and/or the processing system 1214 of the apparatus 1102' configured to perform the functions recited by the aforementioned means. As described *supra,* the processing system 1214 may include the TX Processor 1016, the RX Processor 1070, and the controller/processor 1075. As such, in one configuration, the aforementioned means may be the TX Processor 1016, the RX Processor 1070, and the controller/processor 1075 configured to perform the functions recited by the aforementioned means.

It is understood that the specific order or hierarchy of blocks in the processes / flow charts disclosed is an illustration of exemplary approaches. Based upon design preferences, it is understood that the specific order or hierarchy of blocks in the processes / flow charts may be rearranged. Further, some blocks may be combined or omitted. The accompanying method claims present elements of the various blocks in a sample order.

The previous description is provided to enable any person skilled in the art to practice the various aspects described herein. Various modifications to these aspects will be readily apparent to those skilled in the art, and the generic principles defined herein may be applied to other aspects. The invention is defined by the appended claims. Reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "at least one of A, B, and C," and "A, B, C, or any combination thereof' include any combination of A, B, and/or C, and may include multiples of A, multiples of B, or multiples of C. Specifically, combinations such as "at least one of A, B, or C," "at least one of A, B, and C," and "A, B, C, or any combination thereof' may be A only, B only, C only, A and B, A and C, B and C, or A and B and C, where any such combinations may contain one or more member or members of A, B, or C.

## Claims

1. A method of providing channel state information resources for wireless communications, the method performed by a first evolved node B, eNB (14), the method comprising:
determining (206), at the first eNB (14), a downlink transmission status indicating an amount of or expected transmission properties of downlink traffic transmissions scheduled for a first user equipment, UE (12), connected to the first eNB (14) or other UEs connected to the first eNB (14), wherein the amount and the expected transmission properties affect a level of interference that will be created by the downlink transmissions of the first eNB; and
adjusting (208) a scheduled non-zero power channel state reference signal transmission from the first eNB (14) based on the downlink transmission status such that the scheduled non-zero power channel state reference signal reflects the level of interference that will be created by the downlink transmissions of the first eNB,
wherein a resource (508; 510) for the scheduled non-zero power channel state reference signal transmission coincides with an interference measurement resource of a second UE (30) connected to a second eNB (20).

2. The method of claim 1, wherein the resource for the scheduled non-zero power channel state reference signal transmission is coordinated to coincide with the interference measurement resource of the second UE when the first eNB is coordinated with the second eNB.

3. The method of claim 1, further comprising:
receiving a schedule of interference measurement resources used by the second eNB; and
scheduling the resource for the scheduled non-zero power channel state reference signal transmission to coincide with one of the interference measurement resources of the second eNB.

4. The method of claim 1, wherein the adjusting the scheduled non-zero power channel state reference signal transmission comprises scaling a transmit power of the scheduled non-zero power channel state reference signal transmission in relation to the amount of downlink traffic transmissions for the first UE.

5. The method of claim 4, wherein scaling the transmit power of the scheduled non-zero power channel state reference signal transmission comprises scaling the transmit power to zero when the first eNB has no downlink data for the first UE.

6. The method of claim 1, wherein the adjusting the scheduled non-zero power channel state reference signal transmission comprises precoding the scheduled non-zero power channel state reference signal transmission based on an expected precoding for downlink user data transmission for the first UE.

7. The method of claim 1, further comprising configuring the first UE to use a different resource than the scheduled non-zero power channel state reference signal transmission for channel state estimation.

8. The method of claim 1, further comprising:
determining that the downlink transmission status indicates that the first eNB has no downlink data for the first UE;
transmitting an unadjusted non-zero power channel state reference signal transmission when the first eNB has downlink data for the first UE; and
delaying transmission of the downlink data to the first UE until a channel state indicator is received after transmitting the unadjusted non-zero power channel state reference signal transmission.

9. A first evolved node B, eNB (14), apparatus, for providing channel state information resources for wireless communications, comprising:
means (42; 1112) for determining (206) a downlink transmission status indicating an amount of or expected transmission properties of downlink traffic transmissions scheduled for a first user equipment, UE(12), connected to the first eNB or other UEs connected to the first eNB (14), wherein the amount and the expected transmission properties affect a level of interference that will be created by the downlink transmissions of the first eNB; and
means (50; 1114) for adjusting (208) a scheduled non-zero power channel state reference signal transmission from the first eNB (14) based on the downlink transmission status such that the scheduled non-zero power channel state reference signal reflects the level of interference that will be created by the downlink transmissions of the first eNB,
wherein a resource (508; 510) for the scheduled non-zero power channel state reference signal transmission coincides with an interference measurement resource of a second UE (30) connected to a second eNB (20).

10. The apparatus of claim 9, wherein the resource for the scheduled non-zero power channel state reference signal transmission is coordinated to coincide with the interference measurement resource of the second UE when the first eNB is coordinated with the second eNB.

11. The apparatus of claim 9, further comprising:
means for receiving a schedule of interference measurement resources used by the second eNB; and
means for scheduling the resource for the scheduled non-zero power channel state reference signal transmission to coincide with one of the interference measurement resources.

12. The apparatus of claim 9, wherein the means for adjusting the scheduled non-zero power channel state reference signal transmission comprises means for scaling a transmit power of the scheduled non-zero power channel state reference signal transmission in relation to the amount of downlink traffic transmissions for the first UE.

13. The apparatus of claim 9, wherein the means for adjusting the scheduled non-zero power channel state reference signal transmission comprises means for precoding the scheduled non-zero power channel state reference signal transmission based on an expected precoding for downlink user data transmission for the first UE.

14. The apparatus of claim 9, further comprising:
means for determining that the downlink transmission status indicates that the first eNB has no downlink data for the first UE;
means for transmitting an unadjusted non-zero power channel state reference signal transmission when the first eNB has downlink data for the first UE; and
means for delaying transmission of the downlink data to the first UE until a channel state indicator is received after transmitting the unadjusted non-zero power channel state reference signal transmission.

15. A computer-readable medium having stored thereon computer executable code which, when executed by a computer, cause the computer to carry out the method of any one of claims 1-8.

## Patentansprüche

1. Ein Verfahren zum Vorsehen von Kanalzustandsinformationsressourcen für drahtlose Kommunikationen, wobei das Verfahren durch einen ersten eNB (evolved Node B) (14) durchgeführt wird, wobei das Verfahren aufweist:
Bestimmen (206), an dem ersten eNB (14), eines Abwärtsstreckesendestatus, der eine Größe oder erwartete Sendeeigenschaften von Abwärtsstreckeverkehrssendungen angibt, die für ein mit dem ersten eNB (14) verbundenes erstes Benutzergerät (User Equipment bzw. UE) (12) oder andere mit dem ersten eNB (14) verbundene UEs geplant sind, wobei die Größe und die erwarteten Sendeeigenschaften einen Interferenzgrad, der durch die Abwärtsstreckesendungen des ersten eNBs erzeugt wird, beeinflussen, und
Einstellen (208) einer geplanten nicht-Nullleistung-Kanalzustandsreferenzsignal-Sendung von dem ersten eNB (14) basierend auf dem Abwärtsstreckesendestatus derart, dass das geplante nicht-Nullleistung-Kanalzustandsreferenzsignal den Interferenzgrad, der durch die Abwärtsstreckesendungen des ersten eNB erzeugt wird, wiedergibt,
wobei eine Ressource (508; 510) für die geplante nicht-Nullleistung-Kanalzustandsreferenzsignal-Sendung mit einer Interferenzmessungsressource eines mit einem zweiten eNB (20) verbundenen zweiten UE (30) zusammenfällt.

2. Verfahren nach Anspruch 1, wobei die Ressource für die geplante nicht-Nullleistung-Kanalzustandsreferenzsignal-Sendung derart koordiniert ist, dass sie mit der Interferenzmessungsressource des zweiten UE zusammenfällt, wenn der erste eNB mit dem zweiten eNB koordiniert ist.

3. Verfahren nach Anspruch 1, das weiterhin aufweist:
Empfangen eines Plans von Interferenzmessungsressourcen, die durch das zweite eNB verwendet werden, und
Planen der Ressource für die geplante nicht-Nullleistung-Kanalzustandsreferenzsignal-Sendung derart, dass sie mit einer der Interferenzmessungsressourcen des zweiten eNB zusammenfällt.

4. Verfahren nach Anspruch 1, wobei das Einstellen der geplanten nicht-Nullleistung-Kanalzustandsreferenzsignal-Sendung das Skalieren der Sendeleistung der geplanten nicht-Nullleistung-Kanalzustandsreferenzsignal-Sendung in Bezug auf die Größe der Abwärtsstreckeverkehrssendungen für das erste UE aufweist.

5. Verfahren nach Anspruch 4, wobei das Skalieren der Sendeleistung der geplanten nicht-Nullleistung-Kanalzustandsreferenzsignal-Sendung das Skalieren der Sendeleistung zu Null, wenn das erste eNB keine Abwärtsstreckedaten für das erste UE aufweist, aufweist.

6. Verfahren nach Anspruch 1, wobei das Einstellen der geplanten nicht-Nullleistung-Kanalzustandsreferenzsignal-Sendung das Vorcodieren der geplanten nicht-Nullleistung-Kanalzustandsreferenzsignal-Sendung basierend auf einer erwarteten Vorcodierung für eine Abwärtsstrecke-Benutzerdatensendung für das erste UE aufweist.

7. Verfahren nach Anspruch 1, das weiterhin das Konfigurieren des ersten UE für das Verwenden einer anderen Ressource als der geplanten nicht-Nullleistung-Kanalzustandsreferenzsignal-Sendung für eine Kanalzustandsschätzung aufweist.

8. Verfahren nach Anspruch 1, das weiterhin aufweist:
Bestimmen, dass der Abwärtsstreckesendestatus angibt, dass der erste eNB keine Abwärtsstreckedaten für das erste UE aufweist,
Senden einer nicht-eingestellten nicht-Nullleistung-Kanalzustandsreferenzsignal-Sendung, wenn der erste eNB Abwärtsstreckedaten für das erste UE aufweist, und
Verzögern der Sendung der Abwärtsstreckedaten an das erste UE, bis ein Kanalzustandsindikator nach dem Senden der nicht-eingestellten nicht-Nullleistung-Kanalzustandsreferenzsignal-Sendung empfangen wird.

9. Eine erster-eNB (evolved Node B) (14)-Vorrichtung für das Vorsehen von Kanalzustandsinformationsressourcen für drahtlose Kommunikationen, aufweisend:
Mittel (42; 1112) zum Bestimmen (206) eines Abwärtsstreckesendestatus, der eine Größe oder erwartete Sendeeigenschaften von Abwärtsstreckeverkehrssendungen angibt, die für ein mit dem ersten eNB (14) verbundenes erstes Benutzergerät (User Equipment bzw. UE) (12) oder andere mit dem ersten eNB (14) verbundene UEs geplant sind, wobei die Größe und die erwarteten Sendeeigenschaften einen Interferenzgrad, der durch die Abwärtsstreckesendungen des ersten eNBs erzeugt wird, beeinflussen, und
Mittel (50; 1114) zum Einstellen (208) einer geplanten nicht-Nullleistung-Kanalzustandsreferenzsignal-Sendung von dem ersten eNB (14) basierend auf dem Abwärtsstreckesendestatus derart, dass das geplante nicht-Nullleistung-Kanalzustandsreferenzsignal den Interferenzgrad, der durch die Abwärtsstreckesendungen des ersten eNB erzeugt wird, wiedergibt,
wobei eine Ressource (508; 510) für die geplante nicht-Nullleistung-Kanalzustandsreferenzsignal-Sendung mit einer Interferenzmessungsressource eines mit einem zweiten eNB (20) verbundenen zweiten UE (30) zusammenfällt.

10. Vorrichtung nach Anspruch 9, wobei die Ressource für die geplante nicht-Nullleistung-Kanalzustandsreferenzsignal-Sendung derart koordiniert ist, dass sie mit der Interferenzmessungsressource des zweiten UE zusammenfällt, wenn der erste eNB mit dem zweiten eNB koordiniert ist.

11. Vorrichtung nach Anspruch 9, die weiterhin aufweist:
Mittel zum Empfangen eines Plans von Interferenzmessungsressourcen, die durch das zweite eNB verwendet werden, und
Mittel zum Planen der Ressource für die geplante nicht-Nullleistung-Kanalzustandsreferenzsignal-Sendung derart, dass sie mit einer der Interferenzmessungsressourcen zusammenfällt.

12. Vorrichtung nach Anspruch 9, wobei die Mittel zum Einstellen der geplanten nicht-Nullleistung-Kanalzustandsreferenzsignal-Sendung Mittel zum Skalieren der Sendeleistung der geplanten nicht-Nullleistung-Kanalzustandsreferenzsignal-Sendung in Bezug auf die Größe der Abwärtsstreckeverkehrssendungen für das erste UE aufweisen.

13. Vorrichtung nach Anspruch 9, wobei die Mittel zum Einstellen der geplanten nicht-Nullleistung-Kanalzustandsreferenzsignal-Sendung Mittel zum Vorcodieren der geplanten nicht-Nullleistung-Kanalzustandsreferenzsignal-Sendung basierend auf einer erwarteten Vorcodierung für eine Abwärtsstrecke-Benutzerdatensendung für das erste UE aufweisen.

14. Vorrichtung nach Anspruch 9, die weiterhin aufweist:
Mittel zum Bestimmen, dass der Abwärtsstreckesendestatus angibt, dass der erste eNB keine Abwärtsstreckedaten für das erste UE aufweist,
Mittel zum Senden eines nicht-eingestellten nicht-Nullleistung-Kanalzustandsreferenzsignal-Sendung, wenn der erste eNB Abwärtsstreckedaten für das erste UE aufweist, und
Mittel zum Verzögern der Sendung der Abwärtsstreckedaten an das erste UE, bis ein Kanalzustandsindikator nach dem Senden der nichteingestellten nicht-Nullleistung-Kanalzustandsreferenzsignal-Sendung empfangen wird.

15. Ein computerlesbares Medium mit einem darauf gespeicherten computerausführbaren Code, der bei einer Ausführung durch einen Computer den Computer zum Durchführen des Verfahrens gemäß den Ansprüchen 1 bis 8 veranlasst.

## Revendications

1. Un procédé de fourniture de ressources d'informations d'état de canal destinées à des communications sans fil, le procédé étant exécuté par un premier nœud B évolué, eNB (14), le procédé comprenant :
la détermination (206), au niveau du premier eNB (14), d'un statut de transmission en liaison descendante indiquant une quantité ou des propriétés de transmission attendues de transmissions de trafic en liaison descendante planifiées pour un premier équipement d'utilisateur, UE (12), raccordé au premier eNB (14) ou d'autres UE raccordés au premier eNB (14), où la quantité et les propriétés de transmission attendues affectent un niveau de brouillage qui sera créé par les transmissions en liaison descendante du premier eNB, et
l'ajustement (208) d'une transmission de signal de référence d'état de canal de puissance non nulle planifié à partir du premier eNB (14) en fonction du statut de transmission en liaison descendante de sorte que le signal de référence d'état de canal de puissance non nulle planifié reflète le niveau de brouillage qui sera créé par les transmissions en liaison descendante du premier eNB,
où une ressource (508 ; 510) destinée à la transmission de signal de référence d'état de canal de puissance non nulle planifié coïncide avec une ressource de mesure de brouillage d'un deuxième UE (30) raccordé à un deuxième eNB (20).

2. Le procédé selon la Revendication 1, où la ressource destinée à la transmission de signal de référence d'état de canal de puissance non nulle planifié est coordonnée de façon à coïncider avec la ressource de mesure de brouillage du deuxième UE lorsque le premier eNB est coordonné avec le deuxième eNB

3. Le procédé selon la Revendication 1, comprenant en outre :
la réception d'un échéancier de ressources de mesure de brouillage utilisé par le deuxième eNB, et
la planification de la ressource destinée à la transmission de signal de référence d'état de canal de puissance non nulle planifié de façon à coïncider avec une des ressources de mesure de brouillage du deuxième eNB

4. Le procédé selon la Revendication 1, où l'ajustement de la transmission de signal de référence d'état de canal de puissance non nulle planifié comprend l'étalonnage d'une puissance de transmission de la transmission de signal de référence d'état de canal de puissance non nulle planifié en relation avec la quantité de transmissions de trafic en liaison descendante pour le premier UE.

5. Le procédé selon la Revendication 4, où l'étalonnage de la puissance de transmission de la transmission de signal de référence d'état de canal de puissance non nulle planifié comprend l'étalonnage de la puissance de transmission sur zéro lorsque le premier eNB ne possède pas de données en liaison descendante pour le premier UE.

6. Le procédé selon la Revendication 1, où l'ajustement de la transmission de signal de référence d'état de canal de puissance non nulle planifié comprend le précodage de la transmission de signal de référence d'état de canal de puissance non nulle planifié en fonction d'un un précodage attendu pour une transmission de données d'utilisateur en liaison descendante destinée au premier UE.

7. Le procédé selon la Revendication 1, comprenant en outre la configuration du premier UE de façon à utiliser une ressource différente de la transmission de signal de référence d'état de canal de puissance non nulle planifié pour une estimation d'état de canal.

8. Le procédé selon la Revendication 1, comprenant en outre :
la détermination que le statut de transmission en liaison descendante indique que le premier eNB ne possède pas de données en liaison descendante pour le premier UE,
la transmission d'une transmission de signal de référence d'état de canal de puissance non nulle non ajustée lorsque le premier eNB possède des données en liaison descendante pour le premier UE, et
le retardement de la transmission des données en liaison descendante au premier UE jusqu'à ce qu'un indicateur d'état de canal soit reçu après la transmission de la transmission de signal de référence d'état de canal de puissance non nulle non ajustée.

9. Un premier appareil de nœud B évolué, eNB (14), destiné à la fourniture de ressources d'informations d'état de canal pour des communications sans fil, comprenant :
un moyen (42 ; 1112) de détermination (206) d'un statut de transmission en liaison descendante indiquant une quantité ou des propriétés de transmission attendues de transmissions de trafic en liaison descendante planifié pour un premier équipement d'utilisateur, UE (12), raccordé au premier eNB ou d'autres UE raccordés au premier eNB (14), où la quantité et les propriétés de transmission attendues affectent un niveau de brouillage qui sera créé par les transmissions en liaison descendante du premier eNB, et
un moyen (50 ; 1114) d'ajustement (208) d'une transmission de signal de référence d'état de canal de puissance non nulle planifié à partir du premier eNB (14) en fonction du statut de transmission en liaison descendante de sorte que le signal de référence d'état de canal de puissance non nulle planifié reflète le niveau de brouillage qui sera créé par les transmissions en liaison descendante du premier eNB,
où une ressource (508 ; 510) destinée à la transmission de signal de référence d'état de canal de puissance non nulle planifié coïncide avec une ressource de mesure de brouillage d'un deuxième UE (30) raccordé à un deuxième eNB (20).

10. L'appareil selon la Revendication 9, où la ressource destinée à la transmission de signal de référence d'état de canal de puissance non nulle planifié est coordonnée de façon à coïncider avec la ressource de mesure de brouillage du deuxième UE lorsque le premier eNB est coordonné avec le deuxième eNB

11. L'appareil selon la Revendication 9, comprenant en outre :
un moyen de réception d'un échéancier de ressources de mesure de brouillage utilisé par le deuxième eNB, et
un moyen de planification de la ressource destinée à la transmission de signal de référence d'état de canal de puissance non nulle planifié de façon à coïncider avec une des ressources de mesure de brouillage.

12. L'appareil selon la Revendication 9, où le moyen d'ajustement de la transmission de signal de référence d'état de canal de puissance non nulle planifié comprend un moyen d'étalonnage d'une puissance de transmission de la transmission de signal de référence d'état de canal de puissance non nulle planifié en relation avec la quantité de transmissions de trafic en liaison descendante pour le premier UE.

13. L'appareil selon la Revendication 9, où le moyen d'ajustement de la transmission de signal de référence d'état de canal de puissance non nulle planifié comprend un moyen de précodage de la transmission de signal de référence d'état de canal de puissance non nulle planifié en fonction d'un précodage attendu pour une transmission de données d'utilisateur en liaison descendante pour le premier UE.

14. L'appareil selon la Revendication 9, comprenant en outre :
un moyen de détermination que le statut de transmission en liaison descendante indique que le premier eNB ne possède pas de données en liaison descendante pour le premier UE,
un moyen de transmission d'une transmission de signal de référence d'état de canal de puissance non nulle non ajustée lorsque le premier eNB possède des données en liaison descendante destinées au premier UE, et
un moyen de retardement de la transmission des données en liaison descendante au premier UE jusqu'à ce qu'un indicateur d'état de canal soit reçu après la transmission de la transmission de signal de référence d'état de canal de puissance non nulle non ajustée.

15. Un support lisible par ordinateur possédant conservé en mémoire sur celui-ci du code exécutable par ordinateur qui, lorsqu'il est exécuté par un ordinateur, amène l'ordinateur à exécuter le procédé selon l'une quelconque des Revendications 1 à 8.
